# EUROPEAN PATENT APPLICATION

(11) **EP 2 811 445 A1**
(43) Date of publication of application: **10.12.2014**
(21) Application number: 14156711.5
(22) Date of filing: 26.02.2014
(51) Int. Cl.: G06Q 20/34, G06Q 20/32

(54) **Credit card processing**

(30) Priority: 04.06.2013 US 201313909140
(71) Applicant: NCR Corporation, Duluth, GA 30096 (US)
(72) Inventor: Finley, Michael, Roswell, GA 30076 (US)
(74) Representative: MacLeod, Roderick William

(57) **Abstract**

Techniques for credit card processing are provided. A credit card with a wireless interface wirelessly connects with a mobile device of a consumer that possesses the credit card. The mobile device is a relay between the credit card and a transaction processing device for a transaction to prove the credit card is present for the transaction and obtain Card Present rates for a retailer of the transaction.

## Description

Automation for goods and services has reached record levels in society. Examples are everywhere from online banking and purchasing to a wide-range of devices and physical appliances that include computing and networking capabilities, which were just wishful dreams only a decade ago. For the most part, these advances have occurred because of breakthroughs in electronics and wireless communications, which have allowed complex processing and network connectivity to be achieved in the smallest of physical devices, such as a smart phone or other handheld computing devices, for relatively small cost and effort.

In addition, many retailers now gear services and promotions toward these devices for purposes of interacting with, attracting, and keeping customers at the retailer.

One aspect of business transacting that is evolving with the technology advancements is payment processing. Payment processing affects not just the consumer but the retailer (seller) as well. In order to have a most favorable credit card processing rate, consumers typically have to present their physical credit card to the merchants for purposes of achieving what is referred to as "Card Present" rates in the industry.

A credit card that can be validated as being present and in the possession of the consumer is viewed as less risky than when one is not in possession of the consumer during a purchase. So, consumers performing self-service purchases (mobile pay or online ordering) have no what of demonstrating that their card is present; as a result, the merchant (seller) pays a higher transaction processing fee to the credit card company (referred to as "Card Not Present" (CNP) rates). The CNP rates can be 30 to 50 basis points of a transaction total price.

In an attempt to overcome this problem, smartphone manufacturers have tried to include smart card hardware (so called "secure element") as well as other hardware that emulates the behavior of a wireless card (ISO or Near Field Communication (NFC) standards). Using these solutions, consumers can get specific phones that can be linked to specific accounts; essentially, making the phone pretend to be the credit card when it is "tapped" or placed within a configured proximity of a card reader. The tapping process is inconvenient and usually proprietary to a specific bank and phone manufacturer combination due to the complexity of provisioning (the process of loading an account onto a phone), which is inflexible because linking to new accounts is not easily achieved and being forced to use certain smart phone apps with certain credit cards is inconvenient as well.

In various embodiments, techniques for credit card processing are presented. According to an embodiment, a method for credit card processing is provided.

According to a first aspect of the present invention there is provided a processor-implemented method programmed in memory or a non-transitory processor-readable medium and to execute on one or more processors of a device configured to execute the method, comprising: receiving, by the device, an indication from a mobile device that the mobile device is in wireless communication with a payment card of a consumer; querying, by the device, information from the payment card via interactions with the mobile device to complete a transaction with the consumer; and completing, from the device, the transaction on behalf of the consumer and a retailer based on the information and transaction details associated with the transaction.

The step of receiving may include further identifying the mobile device as a registered device with the retailer on receipt of the indication.

The step of receiving may further include instructing the mobile device to prompt the consumer for a Personal Identification Number (PIN) associated with the payment card for verification.

The step of receiving may further include acquiring with the indication the transaction details for the transaction.

The step of receiving may further include instructing the mobile device to pass an encryption key to the payment card for use in transferring the information.

The step of instructing may further include generating the encryption key as a temporary transaction key tied to the transaction.

The step of querying may further include obtaining from the information a payment card number.

The step of obtaining may further include acquiring from the information one or more of: an expiration date, a billing zip code for the consumer of the payment card, and a security code associated with the payment card.

The step of querying may further include decrypting the information, wherein the payment card encrypts the information and the encrypted information is passed through the mobile device.

The step of decrypting may further include using a key registered to the consumer to decrypt the encrypted information.

The step of completing may further include sending receipt details back to the mobile device to display on completion of the transaction for viewing by the consumer or storage by the consumer.

According to a second aspect of the present invention there is provided a processor-implemented method programmed in memory or a non-transitory processor-readable medium and to execute on one or more processors of a handheld device configured to execute the method, comprising: recognizing, by the handheld device, a wireless connection request from a payment card in proximity to the handheld device; establishing, by the handheld device, a wireless communication session for a transaction of a consumer; and proxying, by the handheld device, communications between the payment card and a transaction server during the wireless communication session to complete the transaction between the consumer and a retailer.

The step of recognizing may further include pinging the payment card to initiate the wireless connection request.

The step of recognizing may further include identifying the wireless connection request as one of: a Near Field Communication (NFC) request, a Bluetooth request, a Bluetooth Low Energy (BLE) request, a Wi-Fi request, and a Radio Frequency (RF) request.

The step of establishing may further include creating a second communication session with the transaction server to facilitate the proxying between the payment card and the transaction server.

The step of establishing may further include interacting with the consumer to authenticate the wireless communication session with the payment card.

The step of proxying may further include encrypting details passed from the payment card to the transaction server based on an encryption key acquired for the transaction from the transaction server.

The method may further comprise: scrubbing, by the handheld device, any transaction details remaining in memory or in storage on the handheld device when the transaction completes.

According to a third aspect of the present invention there is provided a system, comprising: a transaction device having a Point-Of-Sale (POS) transaction manager programmed within memory and/or a non-transitory computer-readable medium for execution on the transaction device; and a payment card device having a mobile transaction agent programmed within memory and/or a non-transitory computer-readable storage media for execution on the payment card device; wherein the POS transaction manager is configured to interact with a mobile device of a consumer for a transaction to acquire payment card details from the mobile transaction agent, the mobile transaction agent configured to interact with the mobile device to process requests sent from the POS transaction manager and return information to the POS transaction manager via the mobile device.

The payment card device may comprise a credit card equipped with processing abilities and wireless communication abilities.

An indication may be received from a mobile device that the mobile device is in wireless communication with a payment card of a consumer. Next, the payment card is queried via interactions with the mobile device to complete a transaction with the consumer. Finally, the transaction is completed on behalf of the consumer and a retailer based on the information and transaction details associated with the transaction.
FIG. 1 is a diagram of a method for credit card processing, according to an example embodiment.
FIG. 2 is a diagram of another method for credit card processing, according to an example embodiment.
FIG. 3 is a diagram of a credit card processing system, according to an example embodiment.

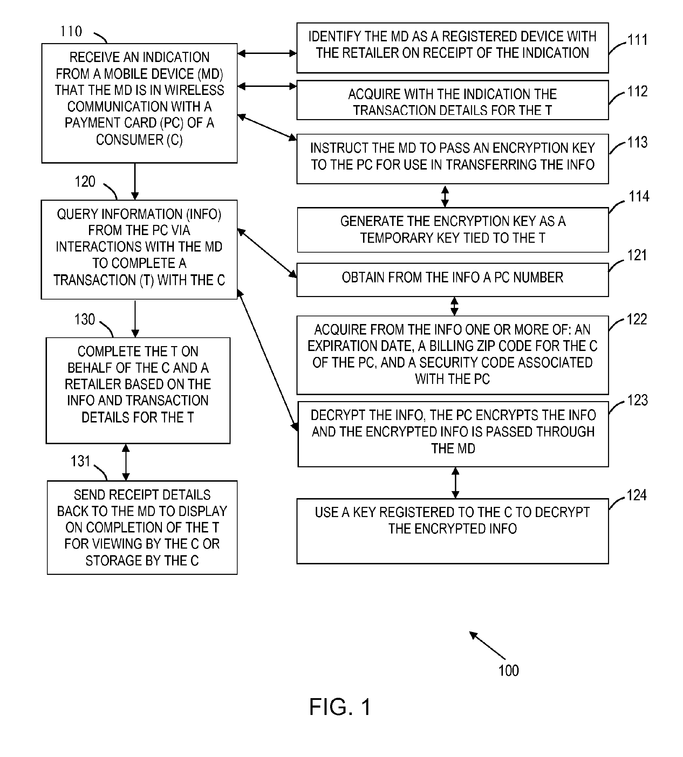

FIG. 1 is a diagram of a method 100 for credit card processing, according to an example embodiment. The method 100 (hereinafter "Point-Of-Sale (POS) transaction manager") is implemented as instructions programmed and residing within memory and/or a non-transitory computer-readable (processor-readable) storage medium and executed by one or more processors. The processors are specifically configured and programmed to process the POS transaction manager. The POS transaction manager operates over a network. The network is wired, wireless, or a combination of wired and wireless.

In an embodiment, the POS transaction manager processes on processors of a server of cloud processing environment. In some instances, the POS transaction manager processes on a Point-Of-Sale (POS) terminal of a retailer (such as a restaurant). The POS terminal can be, in some embodiments, a thin client that interacts with a remote server having the POS transaction manager. Moreover, the POS transaction manager can process on a Virtual Machine (VM) where the underlying physical processing environment and physical processors can vary depending upon the installation of the VM. In still other cases, the POS transaction manager operates on a client-based POS terminal.

Consumers will continue to carry payment cards and government identification cards as a backup to power failure or technology break-downs. The POS transaction manager leverages the payment cards in conjunction with smartphone/mobile device (including wearable device) hardware to provide a novel way of applying mobile payment for a credit card transaction.

Banks will re-issue all payment cards using the European MasterCard and Visa (EMV) format as part of the Visa and MasterCard mandate by 2015. These cards will be provisioned with account information in a secure domain when they are manufactured. This is standard operation.

According to an embodiment herein, a Bluetooth Low Energy (BLE) circuit on the smartcard is introduced with the EMV mandated cards. This BLE interface is capable of being paired (using the consumer's Personal Identification Number (PIN), which is issued with the card) with a consumer's smartphone (mobile or wearable device), allowing the device to become a relay point between the smartcard and a brick-and-mortar Point-Of-Sale (POS) terminal or online purchasing outlets. When a consumer is using his/her smartphone for payments within the personal area network (PAN) radius of the BLE interface, the phone is able to activate the payment card and serve as a bidirectional conduit for the smartcard to communicate with a central processor collecting or handling the credit card transaction.

It is noted that the smartphone (mobile or wearable device) is never responsible for decryption or storage of the payment; it is simply acting as a reader (via the Bluetooth interface) as well as a communication gateway to the processing engine. It does these actions in addition of course to running the payment application itself, which may display items for sale, up-sell based on purchases, allow confirmation of purchases, application of coupons, the ability to provide feedback, etc.

NFC, Wi-Fi and Cellular Communications are other radio options, each with limitations in their practical reach and power requirement. Other radio options can apply as well without departing from the beneficial teachings provided herein and below.

It is within this context that the processing of the POS transaction manager is now discussed with reference to the FIG. 1.

At 110, the POS transaction manager receives an indication from a mobile device that the mobile device is in wireless communication with a payment card of a consumer. The payment card can be a credit or debit card and it is a smart card having processing capabilities and as discussed herein also having wireless communication capabilities. The indication can be prompted unsolicited by the payment card or can be prompted by the mobile device.

According to an embodiment, at 111, the POS transaction manager identifies the mobile device as a registered device with the retailer on receipt of the indication. In other words and for security purposes, the consumer's mobile device is registered with the POS transaction manager. A registration process can be initiated in cases where no registration exists.

In an embodiment, at 112, the POS transaction manager acquires with the indication, the transaction details for the transaction. That is, the consumer is purchasing something (a good or a service from the retailer) and details of that purchase (item identification, price, discounts, loyalty information, etc.) are sent with the indication from the mobile device.

In still another situation, at 113, the POS transaction manager instructs the mobile device to pass an encryption key to the payment card for use in transferring information. That is, the mobile device of the consumer is acting as a proxy for the transaction and the payment mechanism, which is the payment card, so transferring payment details can be made more secure via an encryption-based approach.

Continuing with the embodiment of 113 and in another embodiment at 114, the POS transaction manager generates the encryption key as a temporary key that is tied to the transaction.

At 120, the POS transaction manager queries information from the payment card via interactions with the mobile device to complete the transaction with the consumer. Again, the mobile device is acting as a conduit or proxy for the payment card and the POS transaction manager.

In an embodiment, at 121, the POS transaction manager obtains from the information a payment card number (credit or debit card account usually listed on the face of the card distributed to the consumer).

Continuing with the embodiment of 121 and in another embodiment at 122, the POS transaction manager acquires from the information additional details that include one or more of: an expiration date for the payment card, a billing zip code for the consumer of the payment card, and a security code associated and tied to the payment card.

In yet another situation, at 123, the POS transaction manager decrypts the information received from the payment card where the payment card initially encrypts the information before supplying to the mobile device, and the mobile device passes the encrypted information through to the POS transaction manager for handling. So, the mobile device in this embodiment is unaware of how to decrypt the information provided by the payment card.

Continuing with the embodiment of 123 and in another embodiment at 124, the POS transaction manager uses a key that is registered to the consumer to decrypt the encrypted information.

At 130, the POS transaction manager completes the transaction on behalf of the consumer and the retailer based on the information and transaction details for the transaction.

According to an embodiment, at 131, the POS transaction manager sends receipt details back to the mobile device to display on completion of the transaction for viewing by the consumer and/or for storage by the consumer.

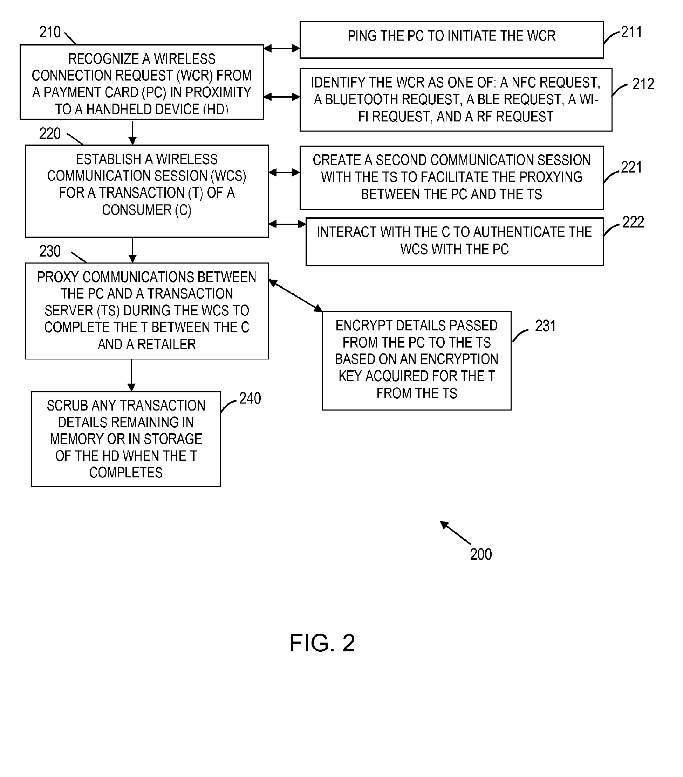

FIG. 2 is a diagram of another method 200 for credit card processing, according to an example embodiment. The method 200 (hereinafter "mobile transaction app") is implemented as instruction and programmed within memory and/or a non-transitory computer-readable (processor-readable) storage medium that executes on one or more processors of a handheld device; the processors of the handheld device are specifically configured to execute the mobile transaction app. The mobile transaction app is operational over a network; the network is wired, wireless, or a combination of wired and wireless.

Whereas the POS transaction manager (the FIG. 1 above) describes processing associated with credit card transaction processing from one or more devices controlled by or accessible to a retailer, the mobile transaction app describes processing associated with credit card transactions from the perspective of a consumer's mobile device that interacts with the retailer's devices (POS devices).

At 210, the mobile transaction app recognizes a wireless connection request from a payment card that is in proximity to a handheld device (smart phone, tablet, wearable device, etc.).

In an embodiment, at 211, the mobile transaction app pings (contacts) the payment card to initiate the wireless communication request. Another words, the consumer is completing a transaction and selects a payment option via an app on the consumer's handheld device, and the app (mobile transaction app) triggers the payment card to request a wireless connection.

According to an embodiment, at 212, the mobile transaction app identifies the wireless communication request as one of: a NFC request, a Bluetooth request, a BLE request, a Wi-Fi request, and a RF request.

At 220, the mobile transaction app establishes a wireless communication session for a transaction of a consumer.

According to an embodiment, at 221, the mobile transaction app creates a second communication session with the transaction server to facilitate the proxying (230) between the payment card and the transaction server.

In an embodiment, at 222, the mobile transaction app interacts with the consumer to authenticate the wireless communication session with the payment card.

At 230, the mobile transaction app proxies communications between the payment card and a transaction server during the wireless communication session to complete the transaction between the consumer and a retailer.

According to an embodiment, at 231, the mobile transaction app encrypts details passed from the payment card to the transaction server based on an encryption key acquired for the transaction from the transaction server.

In an embodiment, at 240, the mobile transaction app scrubs any transaction details remaining in memory or in storage of the handheld device when the transaction completes.

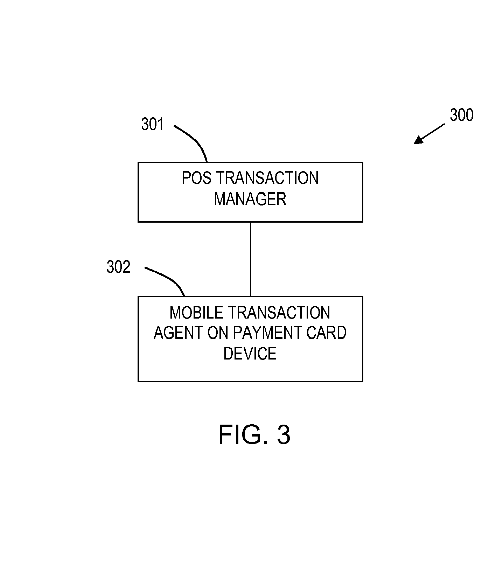

FIG. 3 is a diagram of a credit card processing system 300, according to an example embodiment. The components of the credit card processing system 300 are programmed and resided within memory and/or a non-transitory computer-readable medium and execute on one or more processors of one or more devices. The credit card processing system 300 is operational over a network and the network can be wired, wireless, or a combination of wired and wireless.

The credit card processing system 300 includes a POS transaction manager 301 and a mobile transaction app 302. Each of these will be discussed in turn.

The credit card processing system 300 includes a transaction device having the POS transaction manager 301 programmed within memory and/or a non-transitory computer-readable storage media. The transaction device executes the POS transaction manager 301. Example processing associated with the POS transaction manager 301 was presented above in detail with reference to the FIG. 1.

The POS transaction manager 301 is configured to interact with a mobile device of a consumer for a transaction to acquire payment card details from the mobile transaction agent 302. That is, the POS transaction manager 301 communicates indirectly with the mobile transaction agent 302 via a mobile device of a consumer that processes a mobile transaction manager, such as the mobile transaction manager described above with reference to the FIG. 2.

The credit card processing system 300 also includes a payment card device having a mobile transaction agent 302 programmed within memory and/or a non-transitory computer-readable storage media. The payment card device executes the mobile transaction agent 302. Some aspects of the mobile transaction agent 302 were presented above with reference to the FIGS. 1 and 2.

The mobile transaction agent 302 is configured to interact with the mobile device to process requests sent from the POS transaction manager 301 and return information to the POS transaction manager 301 via the mobile device. Again, the payment card device, via the mobile transaction agent 302, does not directly communicate with the POS transaction manager; rather, the mobile device, via a mobile transaction manager, acts as a conduit or proxy for communications between the POS transaction manager 301 and the mobile transaction agent 302.

According to an embodiment, the payment card device is a credit card equipped with processing abilities and wireless communication abilities. In one case, the payment card device is European MasterCard and Visa compliant with added wireless communication capabilities, such as but not limited to: BLE, Bluetooth, NFC, RF, and/or Wi-Fi.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method (100) programmed in memory or a non-transitory processor-readable medium and to execute on one or more processors of a device configured to execute the method, comprising:
receiving an indication from a mobile device that the mobile device is in wireless communication with a payment card of a consumer (step 110);
querying information from the payment card via interactions with the mobile device to complete a transaction with the consumer (step 120); and
completing the transaction on behalf of the consumer and a retailer based on the information and transaction details associated with the transaction (step 130).

2. The method of claim 1, wherein the step of receiving further includes identifying the mobile device as a registered device with the retailer on receipt of the indication (step 111).

3. The method of claim 1 or 2, wherein the step of receiving further includes instructing the mobile device to prompt the consumer for a Personal Identification Number associated with the payment card for verification.

4. The method of any of claims 1 to 3, wherein the step of receiving further includes acquiring with the indication the transaction details for the transaction (step 112).

5. The method of any preceding claim, wherein the step of receiving further includes instructing the mobile device to pass an encryption key to the payment card for use in transferring the information (step 113).

6. The method of claim 5, wherein instructing further includes generating the encryption key as a temporary transaction key tied to the transaction (step 114).

7. The method of any preceding claim, wherein the step of querying further includes obtaining from the information a payment card number (step 121).

8. The method of claim 7, wherein the step of obtaining further includes acquiring from the information one or more of: an expiration date, a billing zip code for the consumer of the payment card, and a security code associated with the payment card (step 122).

9. The method of any preceding claim, wherein the step of querying further includes decrypting the information, wherein the payment card encrypts the information and the encrypted information is passed through the mobile device (step 123).

10. The method of claim 9, wherein the step of decrypting the information further includes using a key registered to the consumer to decrypt the encrypted information (step 124).

11. The method of any preceding claim, wherein completing further includes sending receipt details back to the mobile device to display on completion of the transaction for viewing by the consumer or storage by the consumer (step 131).

12. A system (300) comprising:
a transaction device having a Point-Of-Sale transaction manager (301) programmed within memory and/or a non-transitory computer-readable medium for execution on the transaction device; and
a payment card device having a mobile transaction agent (302) programmed within memory and/or a non-transitory computer-readable storage media for execution on the payment card device;
wherein the Point-Of-Sale transaction manager (301) is configured to interact with a mobile device of a consumer for a transaction to acquire payment card details from the mobile transaction agent (302), the mobile transaction agent (302) being configured to interact with the mobile device to process requests sent from the Point-Of-Sale transaction manager (301) and return information to the POS transaction manager (301) via the mobile device.

13. The apparatus of claim 12, wherein the payment card device is a credit card equipped with processing means and wireless communication means.
